## Europäisches Patentamt

## European Patent Office

## Office européen des brevets

(19)

(11) Veröffentlichungsnummer: **0 339 056 B1**

(12) **EUROPÄISCHE PATENTSCHRIFT**

(45) Veröffentlichungstag der Patentschrift: **19.05.93**

(51) Int. Cl.⁵: **B60T 8/32**

(21) Anmeldenummer: **88908204.6**

(22) Anmeldetag: **15.09.88**

(86) Internationale Anmeldenummer:
**PCT/EP88/00842**

(87) Internationale Veröffentlichungsnummer:
**WO 89/02842 (06.04.89 89/08)**

(54) **VERFAHREN ZUR REGELUNG DER FAHRSTABILITÄT EINES FAHRZEUGS.**

(30) Priorität: **22.09.87 DE 3731756**

(43) Veröffentlichungstag der Anmeldung:
**02.11.89 Patentblatt 89/44**

(45) Bekanntmachung des Hinweises auf die
Patenterteilung:
**19.05.93 Patentblatt 93/20**

(84) Benannte Vertragsstaaten:
**AT DE FR GB SE**

(56) Entgegenhaltungen:
WO‑A‑85/02592    DE‑A‑ 3 207 728
DE‑A‑ 3 421 732    DE‑A‑ 3 627 548
GB‑A‑ 2 134 200    US‑A‑ 4 484 280

(73) Patentinhaber: **ROBERT BOSCH GMBH**
**Postfach 30 02 20**
**W‑7000 Stuttgart 30(DE)**

(72) Erfinder: **HARTMANN, Uwe**
**Olgastrasse 79**
**W‑7000 Stuttgart 1(DE)**
Erfinder: **VAN ZANTEN, Anton**
**Waldstrasse 15/2**
**W‑7257 Ditzingen 4(DE)**

(74) Vertreter: **Kammer, Arno**
**Postfach 10 56 08 Grenzhöfer Weg 36**
**W‑6900 Heidelberg 1 (DE)**

**Beschreibung**

Die Erfindung betrifft ein Verfahren zur Regelung der Fahrstabilität eines Fahrzeugs, insbesondere bei Kurvenfahrt, der im Oberbegriff der Ansprüche 1 und 3 genannten Art, wie sie beispielsweise aus WO − A − 85/02592 bekannt ist.

Das Ziel dabei ist, das Fahrzeug bei möglichst allen Straßen − und Fahrbedingungen bei Bremsungen zu stabilisieren und für den Fahrer beherrschbar zu machen. Ein Stabilisierung ist zum Beispiel bei unterschiedlichen Reibbeiwerten der Straße an den linken und rechten Rädern des Fahrzeugs oder bei der Gefahr des Übersteuerns bei Kurvenbremsungen notwendig. Beherrschbar ist das Fahrzeug, wenn es auf Lenkeingriffe in der vom Fahrer gewünschten Weise reagiert.

Diese Aufgabe wird durch die im Anspruch 1 oder Anspruch 3 angegebenen Merkmale gelöst.

Der Regler kann einem anderen Regler zur Bremswegoptimierung überlagert oder in diesen integriert werden. Benötigt werden Sensoren für die Gierbewegung und den Lenkwinkel, außerdem Informationen über den Reibbeiwert der Straße und die Fahrzeuggeschwindigkeit. Der Reibbeiwert kann z.B. aus der maximal erreichbaren Fahrzeugverzögerung abgeschätzt werden. Die Fahrzeugverzögerung und die Fahr − zeuggeschwindigkeit sind im allgemeinen durch den Bremsdruckregler (Radregler) bekannt oder sie können direkt gemessen werden.

Mit Hilfe des Lenkwinkels, der Fahrzeuggeschwindigkeit und des Reibbeiwerts kann ein Sollwert oder ein zulässiger Bereich für die Giergeschwindigkeit berechnet werden.

Der Möglichkeiten des Eingriffs der Giergeschwindigkeitsregelung auf die Bremskraft sind abhängig von der Zahl der Kanäle, d.h., der Anzahl unabhängig voneinander im Bremsdruck beeinflußbarer Gruppen von Rädern.

Bei einem Einkanalsystem sind alle Radbremsdrucke nur gemeinsam änderbar. Ein von der Gierge − schwindigkeitsregelung ausgelöster Druckauf − oder − abbau wirkt deshalb stets auf alle Räder. Bei Druckaufbau ist darauf zu achten, daß nicht beide Hinterräder gleichzeitig blockieren.

Bei einem Zweikanalsystem ist z.B. jeweils eine Diagonale getrennt ansteuerbar. Wie in den Kanälen eingegriffen wird, ist abhängig vom Vorzeichen der Giergeschwindigkeit und des Lenkwinkels und ver − schiedenen Randbedingungen.

Bei Drei − und Vierkanalsystemen kann der Bremsdruck auch an einzelnen Rädern beeinflußt werden.

Weitere Ausbildungen und Vorteile ergeben sich aus den Unteransprüchen und der Figurenbeschrei − bung.

Es zeigen:

Fig. 1 einen Bremsdruckregler bei dem die Erfindung als übergelagerter Regler zum Einsatz kommen kann,

Fig. 2 ein Blockschaltbild eines beispielhaften Reglers.

Fig. 3 und 5 Diagramme zur Erläuterung,

Fig. 6 ein Blockschaltbild eines anderen Reglers.

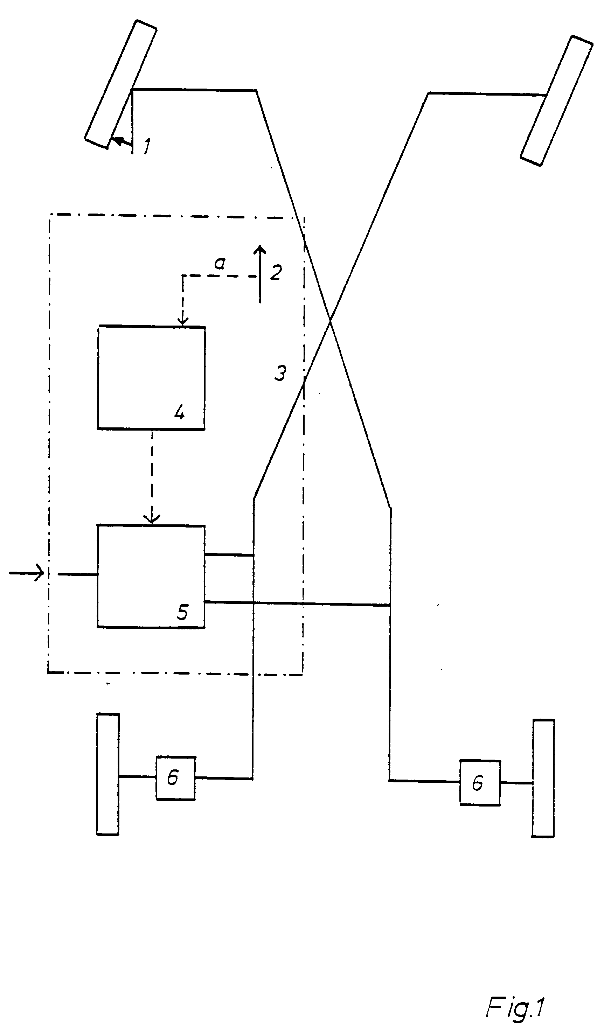

Anhand der Fig. 1 wird eine Einkanal − Konfiguration eines ABS mit einem Meßwertaufnehmer für die Fahrzeugbeschleunigung in Längsrichtung 2 des Fahrzeugs beschrieben. In einem Schaltgerät 4 auf Microprozessorbasis werden durch eine Verknüpfung Stellsignale für einen Druckmodulator 5 berechnet. Der Druckmodulator, z.B. ein modulierbarer Bremskraftverstärker, kann den Druck in beiden Bremskreisen synchron ändern. Entsprechend der serienmäßigen Austattung des Fahrzeugs können Vorrichtungen vorhanden sein, die ein geeignetes Bremsdruckverhältnis zwischen Vorder − und Hinterachse einstellen. Das können z.B. ein oder zwei lastabhängige Bremsdruckminderer 6 sein. Ein Vorteil dieser Anordnung ist, daß sich die komplette Anlage 3 in einem Block zusammenfassen läßt, welcher einen bereits vorhandenen Bremskraftverstärker ersetzen kann, ohne daß weitere Änderungen an der Bremsanlage des Fahrzeugs notwendig sind.

Bei diesem Regler wird nach einem Druckaufbauimpuls fester oder variabler Länge gewartet, bis die Ableitung der gefilterten Fahrzeugbeschleunigung (da/dt) einen Minimalwert (negativ) annimmt. Nun wird aus der gemessenen Höhe des Drucksprungs eine Grenze berechnet, die von da/dt unterschritten werden muß, damit ein weiterer Druckaufbau und Druckaufbauimpuls folgen kann.

Dieser Wechsel zwischen Druckaufbau und Druckhalten wird solange wiederholt, bis die Fahrzeugver − zögerung nach dem Druckaufbauimpuls nur noch wenig zugenommen hat. Man kann nun davon ausgehen, daß sich mehrere Räder im Bereich des Maximums der Schlupfkurve bewegen oder dieses bereits überschritten haben.

Durch die Wahl der Grenze kann in gewissem Maße festgelegt werden, ob das Blockieren von einem oder mehreren Rädern akzeptiert wird. Wenn die Untergrenze für da/dt nach einem Druckaufbauimpuls nicht unterschritten wurde, dann baut der Regler, um die Seitenführungskraft zu erhöhen, Druck ab, bis weitgehend sichergestellt ist, daß sich wieder Räder im stabilen Bereich links vom Maximum der Schlupfkurve bewegen. Das wird durch eine plötzliche, starke Abnahme der Fahrzeugverzögerung erkannt, d.h., da/dt überschreitet eine vorgegebene Obergrenze. Nun kann sofort wieder Druck aufgebaut werden, und der ganze Vorgang wiederholt sich.

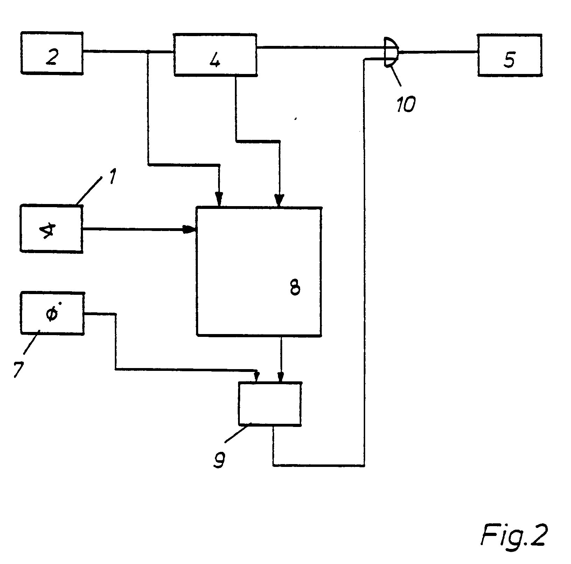

In Fig. 2 ist die Reglerelektronik der Fig. 1 noch einmal dargestellt. Es ist jedoch zusätzlich der überlagerte Regler gezeigt, der aus einem Lenkwinkelgeber 1, einem Meßwertgeber 7 für die Giergeschwindigkeit, einer Auswerteschaltung 8 und einem Vergleicher 9 besteht.

Der Auswerteschaltung 8 wird neben den Signalen der Meßwertgeber 1 und 7 das Fahrzeugverzögerungssignal des Meßwertgebers 2 und eine die Fahrzeuggeschwindigkeit darstellende Größe zugeführt. Mittels der maximalen Fahrzeugverzögerung wird in der Auswerteschaltung 8 der vorhandene Reibbeiwert $\mu$ abgeschätzt.

In der Auswerteschaltung 8 werden aus den Meßwerten die Kurven 11 und 12 errechnet. Sie stellen die Grenzwertverläufe für die Giergeschwindigkeit $\dot{\Phi}$ in Abhängigkeit vom Lenkwinkel $\delta$ dar, wobei je nach Einschlagrichtung der Lenkwinkel und die resultierende Giergeschwindigkeit positiv oder negativ bezeichnet sind.

Für Rechtseinschlag stellt die Kurve 11 den unteren Grenzwertverlauf dar. Erreicht bei einem bestimmten Lenkwinkel unter Berücksichtigung des herrschenden $\mu$ und der vorhandenen Fahrzeugge-schwindigkeit $V_F$ die Giergeschwindigkeit $\dot{\Phi}$ nicht die durch den Grenzwertverlauf gegebene Größe, so wird, um zu einer höheren Giergeschwindigkeit zu kommen, Druck abgebaut. Damit wird die Seitenführung und die Giergeschwindigkeit erhöht. Der dazu notwendige Vergleich zwischen gemessener Giergeschwindigkeit und dem errechneten Grenzwert wird im Vergleicher 9 vorgenommen, der dann ein Absenksignal über ein Oder-Gatter 10 an die Bremsdrucksteuereinrichtung 5 gibt. Als obere Vergleichsgröße wird auch die Schwelle 13 zur Verfügung gestellt. Wird sie von der gemessenen Giergeschwindigkeit überschritten, so wird, um ein Übersteuern zu vermeiden, Druck aufgebaut. Im Bereich E zwischen den Kurven 11 und 13 wird der Bremsdruck nur durch den Bremsdruckregler 2, 4 und 5 bestimmt.

Die Kurve 11 setzt sich aus mehreren Bereichen zusammen. Zwischen 0 und A, also im Bereich kleiner Lenkwinkel ist ein Toleranzbereich vorgegeben. Wird er nach oben oder unten verlassen, so wird Druck abgebaut, um Instabilität zu vermeiden.

Dieser Toleranzbereich bei kleinen Lenkwinkeln (tote Zone) kann durch folgende Beziehung gegeben sein:

$$\dot{\Phi}_{Tol} = \dot{b}_{Tol} + \dot{K}_{Tol} \cdot \delta$$

wobei $b_{Tol}$ und $K_{Tol}$ fahrzeuggeschwindigkeitsabhängige Koeffizienten sind
Mit dynamischer Korrektur zur Berücksichtigung der Fahrzeugträgheit und Lenkelastizität erhält man:

$$\dot{\Phi}_{Tol}^{U,0} = \pm \, b_{Tol} + K_{Tol} \cdot \delta_{F'}$$

wobei man $\delta_F$ durch Tiefpaßfilterung erhalten kann.

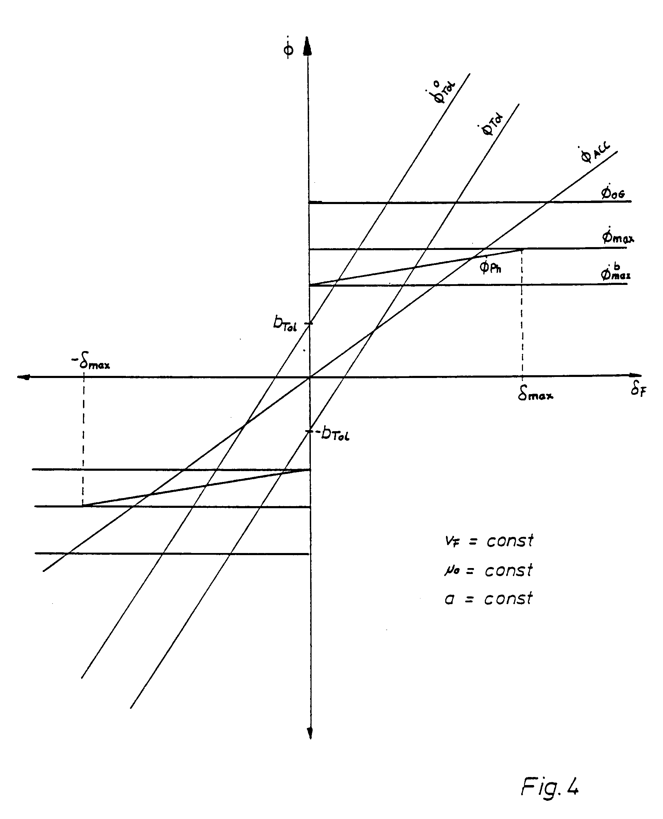

In Fig. 4 sind die beiden Geraden eingezeichnet und mit

$$\dot{\Phi}_{Tol}^{o} \quad \text{und} \quad \dot{\Phi}_{Tol}^{u}$$

bezeichnet. Die Instabilität in diesem Bereich könnte z.B. durch unterschiedliche Reibbeiwerte an den Fahrzeugseiten hervorgerufen werden.

An den Toleranzbereich (0 bis A) schließt sich ein Bereich A bis B an, in dem überprüft wird, ob eine der Richtung des Lenkradeinschalgs entsprechende Giergeschwindigkeit auftritt. Ist dies nicht der Fall, so wird Bremsdruck abgebaut und dadurch die Fahrzeugbeherrschbarkeit sichergestellt.

Im Bereich B bis C wird der Verlauf der Kurve durch die sogenannte Ackermann-Bedingung bestimmt.

Bei Kurvenfahrt ohne Schräglauf an den Rädern gilt

$$\dot{\Phi}_A = \frac{v_F \cdot \delta}{1} \ ,$$

wobei 1 der Radstand ist.

Mit einer dynamischen Korrektur zur Berücksichtigung von Fahrzeugträgheit und Lenkelastizität, erhält man die dynamische korrigierte Ackermann − Bedingung.

$$\dot{\Phi}_{AC} = \delta_F \cdot \frac{v_F}{1}$$

$\delta_F$ kann durch eine Tiefpaßfilterung aus $\delta$ gewonnen werden. Da dieser Wert in der Praxis durch mit Lenkwinkel und Fahrzeuggeschwindigkeit zunehmenden Schräglauf an den Rädern (bei zum untersteuern tendierenden Fahrzeugen vor allen an den Vorderrädern) nicht erreicht wird, erfolgt eine weitere, fahrzeug − abhängige Korrektur, z.B.:

$$\dot{\Phi}_{ACC} = a_{AC} \cdot \dot{\Phi}_{AC}$$

mit $a_{AC} = f_{AC}(v_F, \delta)$
z.B. mit

$$f_{AC} = \frac{1}{1 + K_{v_F} \cdot v_F{}^2}$$

Man erkennt, daß der Kurvenanteil B bis C nicht nur von $\delta$, sondern auch von $v_F$ abhängt.
Auch diese Kurve ist in Fig. 4 eingezeichnet.
Ab dem Lenkwinkel C kann der Grenzwertverlauf nach folgenden Kriterien festgelegt werden:
Im ungebremsten Fall gilt für die notwendige Querbeschleunigung $a_Q$ zur Überwindung der Haftreibung:
$a_Q = \mu_o \cdot g$, wobei $\mu_o$ der Reibbeiwert und g die Erdbeschleunigung ist.
Die Zentrifugalbeschleunigung bei stationärer Kurvenfahrt ist

$$a_Z = R \ \dot{\Phi}^2$$

$$= R \ \dot{\Phi} \frac{v_F}{R} \ = \dot{\Phi} \cdot v_F,$$

wobei R der Kurvenradius ist.
Es muß sein:
$a_Q = a_Z$ ; das bedeutet, daß die maximale Giergeschwindigkeit

$$\dot{\Phi}_{max} = \frac{\mu_o \cdot g}{v_F} \quad \text{ist.}$$

4

Der mittlere Fahrbahnreibbeiwert wird dabei aus der zuletzt maximal erreichten Längsverzögerung −a während der Bremsung abgeschätzt:

$$\mu_o = K_{\mu_o} \cdot (-a)_{max},$$

wobei $K_{\mu_o}$ eine Konstante ist.

Die Längenverzögerung wird direkt gemessen oder durch Differenzierung der Fahrzeug − bzw. einer ggf. vorliegenden Referenzgeschwindigkeit gewonnen.

Berücksichtig man die abnehmende Seitenführungskraft bei zunehmender Längsverzögerung und damit zunehmendem Radschlupf, so erhält man:

$$\overset{\bullet}{\Phi}{}^b_{max} = \frac{1}{1 + K_b \cdot (-a)} \cdot \overset{\bullet}{\Phi}_{max}$$

wobei $K_b$ abhängig von Reifenparametern (Bremsschlupfsteifigkeit, Schräglaufsteifigkeit) ist.

Um auch in diesem Bereich eine gewisse Lenkwinkelabhängigkeit zu erreichen, wird der Grenzverlauf im Bereich C bis $\delta_{max}$ folgendermaßen festgelegt:

$$\overset{\bullet}{\Phi}_{Ph} = \pm K_{Ph} \cdot \left( \overset{\bullet}{\Phi}{}^b_{max} + \frac{\delta_F}{\delta_{max}} \left( \overset{\bullet}{\Phi}_{max} - \overset{\bullet}{\Phi}{}^b_{max} \right) \right)$$

$K_{Ph}$ ist dabei eine Konstante zur Berücksichtigung von Abschätzungsfehlern, Ungenauigkeiten usw.

Bei der Konstanten $\delta_{max}$ handelt es sich um einen Lenkwinkel, der üblicherweise bei Fahrzeugge − schwindigkeit, bei denen eine Regelung notwendig sein kann, nicht überschritten wird.

Das bedeutet, daß bei zunehmendem Lenkwinkel, wenn der Fahrer also eine Zunahme der Gierge − schwindigkeit erreichen möchte, der Druck im Extremfall soweit abgebaut wird, bis sich die im ungebrem − sten Fall erreichbare Giergeschwindigkeit einstellt.

Wird der Lenkwinkel $\delta_F$ größer als $\delta_{max}$, nimmt der Grenzwert unabhängig vom Lenkwinkel den Wert

$$\overset{\bullet}{\Phi}_{Ph} = \pm K_{Ph} \cdot \overset{\bullet}{\Phi}_{max}$$

an.

Auch die Geraden

$$\overset{\bullet}{\Phi}_{max}, \quad \overset{\bullet}{\Phi}{}^b_{max} \quad \text{und} \quad \overset{\bullet}{\Phi}_{Ph}$$

sind in Fig. 4 eingezeichnet. (Für $K_{Ph} = 1$).

Überschreitet die Giergeschwindigkeit den Wert D, dann besteht die Gefahr, daß das Fahrzeug übersteuert und instabil wird. Eine Bremsdruckabsenkung würde die Giergeschwindigkeit weiter erhöhen und die Instabilität verstärken. Deshalb ist es hier besser, den Bremsdruck an den Vorderrädern und damit den Schlupf zu erhöhen, um die Seitenführungskraft und die Giergeschwindigkeit abzubauen.

5

Man erhält als obere Grenze für die Giergeschwindigkeit um eine Übersteuerung zu vermeiden:

$$\dot{\Phi}_{OG} = \pm \, K_{OG} \cdot \dot{\Phi}_{max}^{b}$$

mit $K_{OG} > 1$

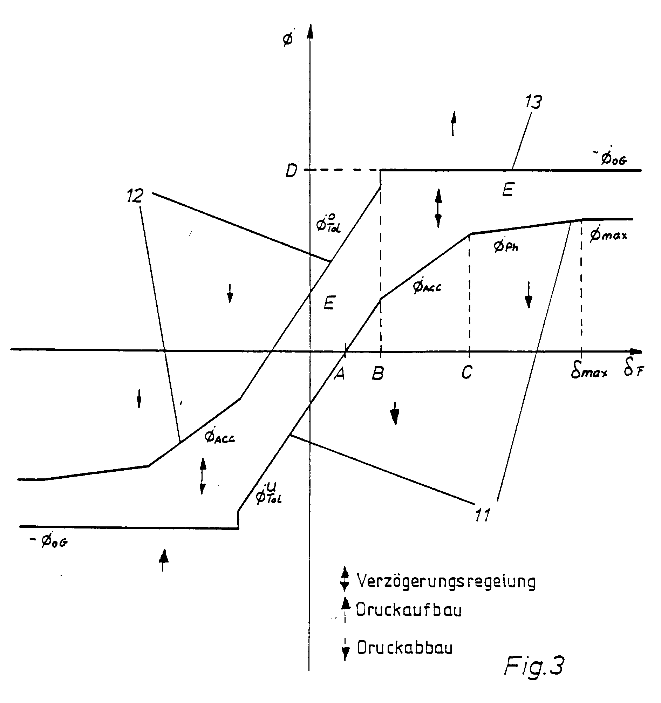

Auch der Verlauf dieser Geraden ist in Fig. 4 eingezeichnet. Aus Stücken der in Fig. 4 eingezeichneten Geraden ergeben sich die Verläufe 11, 12 und 13 der Fig. 3, die für eine Konstante Fahrzeuggeschwindig‐keit $v_F$, ein konstantes a und damit konstantes $\mu_o$ gelten. Für den Lenkradeinschlag nach links gelten die obigen Ausführungen entsprechend. In Fig. 3 ist durch Pfeile angedeutet, wann Druckabbau und ‐aufbau stattfindet; der Doppelpfeil im Bereich E deutet an, daß dort nur durch den unterlagerten Regler geregelt wird.

Durch den durch den Grenzwertverlauf erzielten Bremsdruckabbau wird der Schlupf an den entspre‐chenden Rädern abgesenkt und die Seitenführungskraft erhöht. Das Fahrzeug reagiert dann stärker auf den Lenkeinschlag und die Giergeschwindigkeit wird größer.

Im mittleren Bereich E zwischen den Grenzen muß nicht in den untergeordneten Regelalgorithmus eingegriffen werden. Hier kann wie üblich die Bremskraft optimiert werden.

Die benötigte Fahrzeuggeschwindigkeit kann z.B. auch mit Hilfe der mittleren Vorderradgeschwindigkeit am Differential (Tachogeschwindigkeit) und der gemessenen Fahrzeugverzögerung approximiert werden.

Als Alternative zu der beschriebenen Bereichsüberwachung für die Giergeschwindigkeit ist auch eine direkte Regelung um einen Sollwert für die Giergeschwindigkeit möglich. Der Sollwert kann ebenfalls stückweise aus den oben angegebenen Kriterien gebildet werden. Dabei ist anstelle eines zwangsweisen Eingriffes in die Längsverzögerungsregelung eine stärkere Verkopplung der beiden Regler vorzuziehen (Mehrgrößenregelung).

Ein verbessertes Regelverhalten läßt sich erzielen, wenn auch die differenzierte Giergeschwindigkeit (Gierbeschleunigung) herangezogen wird. Damit läßt sich ein PD‐Giergeschwindigkeitsregler verwirklichen. Möglich ist auch ein PD‐Regler mit toter Zone.

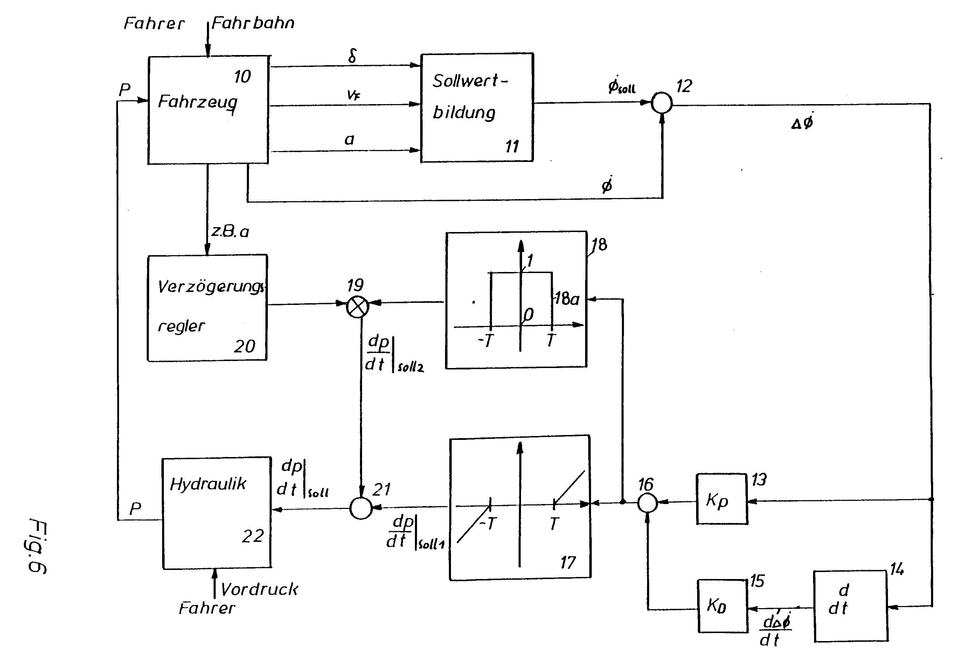

Es folgt ein Beispiel eines solchen PD‐Reglers mit toter Zone für ein Einkanalsystem, z.B. für das eingangs beschriebene System (Fig. 1). In Fig. 6 ist ein Blockschaltbild des Gesamtsystems dargestellt. An einem Fahrzeug 10 werden der Lenkwinkel $\delta$, die Fahrzeugbeschleunigung a und die Fahrzeuggeschwin‐digkeit $v_F$ gemessen und einem Sollwertbildner zugeführt. $v_F$ kann auch z.B. mit Hilfe der Tachometerge‐schwindigkeit und der Fahrzeugbeschleunigung abgeschätzt werden.

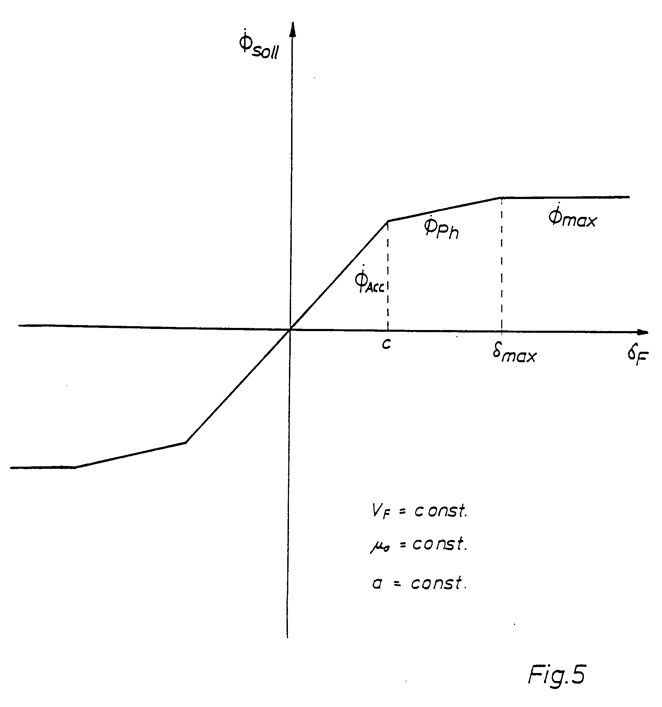

Im Sollwertbildner 11 wird ein Sollwert für die Giergeschwindigkeit ($\dot{\Phi}_{Soll}$) bestimmt, z.B. wie in Fig. 5 dargestellt. Die Sollwertkurve setzt sich auch hier stückweise aus den bereits anhand von Fig. 4 beschrie‐benen Geraden zusammen. Die Geraden

$$\dot{\Phi}_{Toi}^{u} \quad \text{und} \quad \dot{\Phi}_{Toi}^{o}$$

werden hier nicht benötigt.

Der so bestimmte Sollwert

$$\dot{\Phi}_{Soll}$$

wird im Vergleicher 12 mit der gemessenen Giergeschwindigkeit $\dot{\Phi}$ verglichen und man erhält die Regelabweichung $\Delta\dot{\Phi}$. Diese Größe wird einem Verstärker 13 zugeführt und man erhält den P‐Anteil für die Regelung. Die im Differenzierer 14 differenzierte Regelabweichung ergibt nach einer Verstärkung in einem Verstärker 15 den D‐Anteil.

P‐ und D‐Anteil werden in einem Addierer 16 addiert und durch einen Block 17 mit einer statischen Kennlinie mit einer toten Zone versehen. Am Ausgang von Block 17 liegt der Solldruckänderungsgradient

$$\left.\frac{dp}{dt}\right|_{Soll1}$$

bzw. eine ähnliche Größe (z.B. eine Ventilansteuerzeit) vor.

Der Ausgang des Addierers 16 wird außerdem einem Block 18 mit der Kennlinie 18a zugeführt. Sein Ausgang liefert im Bereich der toten Zone (von $-T$ bis T) eine Eins und außerhalb davon eine Null. Diese Größe wird in einem Multiplizierer 19 mit dem Ausgang eines Verzögerungsreglers multipliziert und man erhält

$$\left.\frac{dp}{dt}\right|_{Soll2}$$

$$\left.\frac{dp}{dt}\right|_{Soll1} \quad und \quad \left.\frac{dp}{dt}\right|_{Soll2}$$

werden in einem Addierer 21 addiert und der Hydraulik 22 über eine Ansteuerung und einen Druckmodulator in geeigneter Weise zugeführt. Die Druckänderungen werden in der Hydraulik 22 integriert und der resultierende Druck p wird der Bremsanlage des Fahrzeugs 1 zugeführt. Man erreicht durch die Verwendung der Kennlinie im Block 17 und 18a, daß bei kleinen Regelabweichungen $\Delta\dot{\Phi}$, wenn also der Ausgang des Addierers 21 zwischen $-T$ und T liegt,

$$\left.\frac{dp}{dt}\right|_{Soll1}$$

zu Null wird und nur der Verzögerungsregler Druckänderungen veranlassen kann.

Umgekehrt wird bei größeren Regelabweichungen

$$\left.\frac{dp}{dt}\right|_{Soll2}$$

zu Null und die Giergeschwindigkeit ist durch ihre höhere Priorität alleine für Druckänderungen verantwortlich.

Die Breite der toten Zone $-T$ bis T kann z.B. von der Fahrzeuggeschwindigkeit abhängig gemacht werden.

Außer bei geregelten Bremsungen ist die Giergeschwindigkeitsregelung auch bei Antriebsschlupf einsetzbar. Hierbei kann z.B. bei zu starkem Untersteuern (Vorderradantrieb) bzw. Übersteuern (Hinterradantrieb) während einer Kurvenfahrt der Antriebsschlupf durch Reduzierung des Antriebsmoments (Motoreingriff, Bremsung) zurückgenommen werden.

Verwendete Bezeichnungen:

$\dot{\Phi}$ − Giergeschwindigkeit

$\delta$ − Lenkwinkel

$v_F$ − Fahrzeuggeschwindigkeit

$a$ − Fahrzeugbeschleunigung

$\mu_o$ − Reibbeiwert

1 − Radstand

R — Kurvenradius

g — Erdbeschleunigung ;

weitere Konstanten, z.T. fahrzeugabhängig sind:

$$K_D, \ K_{v_F}, \ K_{\mu_o}, \ K_{Ph}, \ K_b, \ K_{OG}.$$

**Patentansprüche**

1. Verfahren zur Regelung der Fahrzeugstabilität bei Kurvenfahrt, wobei die Fahrzeuggeschwindigkeit $v_F$ und der Reibbeiwert $\mu$ zwischen Reifen und Straße ermittelt werden, dadurch gekennzeichnet, daß auch der Lenkwinkel $\delta$ und die Drehgeschwindigkeit $\dot{\Phi}$ des Fahrzeugs um die Hochachse (Giergeschwindigkeit) ermittelt, ein unterer Grenzwertverlauf der Giergeschwindigkeit $\dot{\Phi}$ in Abhängigkeit vom Lenkwinkel $\delta$ unter Berücksichtigung der Fahrzeuggeschwindigkeit und des Reibbeiwerts festge‐legt und bei Unterschreiten des Grenzwertverlaufs durch die gemessene Giergeschwindigkeit $\dot{\Phi}$ Bremsdruck abgesenkt wird.

2. Verfahren nach Anspruch 1, dadurch gekennzeichnet, daß eine obere Grenze für die Giergeschwindig‐keit festgelegt wird und daß ab deren Überschreiten Bremsdruck aufgebaut wird.

3. Verfahren zur Regelung der Fahrzeugstabilität bei Kurvenfahrt, wobei die Fahrzeuggeschwindigkeit $v_F$ und der Reibbeiwert $\mu$ zwischen Reifen und Straße ermittelt werden, dadurch gekennzeichnet, daß auch der Lenkwinkel $\delta$ und die Drehgeschwindigkeit $\dot{\Phi}$ des Fahrzeugs um die Hochachse (Giergeschwindigkeit) ermittelt, ein Sollwertverlauf der Giergeschwindigkeit $\dot{\Phi}$ in Abhängigkeit vom Lenkwinkel $\delta$ unter Berücksichtigung der Fahrzeuggeschwindigkeit und des Reibbeiwerts festgelegt und durch Auf‐ und Abbau des Bremsdrucks die gemessene Giergeschwindigkeit $\dot{\Phi}$ in Richtung auf den Sollwertverlauf geregelt wird.

4. Verfahren nach einem der Ansprüche 1 bis 3, dadurch gekennzeichnet, daß bei kleinen Lenkwinkeln ein Toleranzbereich für die Giergeschwindigkeit $\dot{\Phi}$ vorgegeben ist und daß bei Verlassen dieses Bereichs Druck abgesenkt wird.

5. Verfahren nach Anspruch 4, dadurch gekennzeichnet, daß ab einem vorgegebenen kleinen Lenkwinkel überprüft wird, ob eine Giergeschwindigkeit in die richtige Richtung auftritt, und daß Bremsdruck abgebaut wird, wenn diese Bedingung nicht erfüllt ist.

6. Verfahren nach Anspruch 4 oder 5, dadurch gekennzeichnet, daß für einen anschließenden Lenkwin‐kelbereich der Grenzwertverlauf bzw. Sollwertverlauf durch die gegebenenfalls korrigierte Ackermann‐Bedingung bestimmt ist.

7. Verfahren nach Anspruch 6, dadurch gekennzeichnet, daß ab einem vorgegebenen Lenkwinkel $\delta_{max}$ ein konstanter Grenzwert‐ bzw. Sollwertverlauf vorgegeben ist.

8. Verfahren nach einem der Ansprüche 1 bis 7, dadurch gekennzeichnet, daß zusätzlich ein Brems‐druckregler (ABS, ASR) zur Optimierung des Bremsschlupfs vorgesehen ist.

9. Verfahren nach einem der Ansprüche 6 oder 7, dadurch gekennzeichnet, daß in einem Bereich, der zwischen dem durch die Ackermann‐Bedingung bestimmten Bereich und dem durch einen konstanten Wert bedingten Bereich liegt, der Grenzwertverlauf oder Sollwertverlauf durch Stücke der Geraden

$$\dot{\Phi}_{Ph} = \pm K_{Ph} \cdot (\dot{\Phi}^b_{max} + \frac{\delta}{\delta_{max}} (\dot{\Phi}_{max} - \dot{\Phi}^b_{max}))$$

8

gegeben ist, wobei $k_{Ph}$ eine Konstante,

$$\dot{\Phi}_{max}^{b} = \frac{1}{1 + K_b(-a)} \dot{\Phi}_{max}'$$

$K_b$ eine Konstante,

$$\dot{\Phi}_{max} = \mu_o \ (-a)_{max}$$

und $K_{\mu o}$ eine Konstante ist.

10. Verfahren nach einem der Ansprüche 1 bis 9, dadurch gekennzeichnet, daß der Reibbeiwert $\mu$ aus der während einer Bremsung maximal erreichten Fahrzeugverzögerung $(-a)_{max}$ abgeleitet wird.

**Claims**

1. Method for controlling vehicle stability during cornering, in which the vehicle speed $v_F$ and the coefficient of friction $\mu$ between the tyres and the road is determined, characterised in that the steering angle $\delta$ and the angular velocity $\dot{\Phi}$ of the vehicle about the vertical axis (yaw velocity] is also determined, a lower limit − value characteristic of the yaw velocity $\dot{\Phi}$ is established as a function of the steering angle $\delta$, taking into account the vehicle speed and the coefficient of friction and, if the limit − value characteristic is undershot by the measured yaw velocity $\dot{\Phi}$, brake pressure is reduced.

2. Method according to Claim 1, characterised in that an upper limit for the yaw velocity is established and in that brake pressure is built up when it is exceeded.

3. Method for controlling vehicle stability during cornering, in which the vehicle speed $v_F$ and the coefficient of friction $\mu$ between the tyres and the road is determined, characterised in that the steering angle $\delta$ and the angular velocity $\Phi$ of the vehicle about the vertical axis (yaw velocity) is also determined, a set point characteristic of the yaw velocity $\dot{\Phi}$ is established as a function of the steering angle $\delta$, taking into account the vehicle speed and the coefficient of friction, and the measured yaw velocity $\dot{\Phi}$ is adjusted towards the set point characteristic by building up and reducing the brake pressure.

4. Method according to one of Claims 1 to 3, characterised in that, in the case of small steering angles, a tolerance range is specified for the yaw velocity $\dot{\Phi}$ and in that pressure is reduced if this range is departed from.

5. Method according to Claim 4, characterised in that, from a specified small steering angle onwards, a check is made to determine whether a yaw velocity in the correct direction is occurring and in that brake pressure is reduced if this condition is not fulfilled.

6. Method according to Claim 4 or 5, characterised in that, for an adjoining steering − angle range, the limit − value characteristic or set point characteristic is determined by the Ackermann condition, corrected if required.

7. Method according to Claim 6, characterised in that, from a specified steering angle $\delta_{max}$ onwards, a constant limit − value or set point characteristic is specified.

8. Method according to one of Claims 1 to 7, characterised in that a brake pressure controller (ABS, ASR) is additionally provided in order to optimise the brake slip.

9. Method according to either of Claims 6 or 7, characterised in that, in a range which lies between the range determined by the Ackermann condition and the range governed by a constant value, the limit − value characteristic or set point characteristic is given by sections of the straight line

$$\dot{\Phi}_{Ph} = \pm K_{Ph} \cdot (\dot{\Phi}_{max}^{b} \div \frac{\delta}{\delta_{max}} \ (\dot{\Phi}_{max} - \dot{\Phi}_{max}^{b}))$$

where $K_{Ph}$ is a constant,

$$\dot{\Phi}_{max}^{b} = \frac{1}{1 \div K_b(-a)} \ \dot{\Phi}_{max} \ k_b$$

is a constant,

$$\dot{\Phi}_{max} = \mu_0 \ (-a)_{max}$$

and $K_{\mu o}$ is a constant.

**10.** Method according to one of Claims 1 to 9, characterised in that the coefficient of friction $\mu$ is derived from the maximum vehicle retardation of $(-a)_{max}$ achieved during a braking operation.

**Revendications**

**1.** Procédé de régulation de la stabilité d'un véhicule sur un trajet courbe, procédé selon lequel on détermine la vitesse de déplacement $v_F$ et le coefficient d'adhérence $\mu$ entre les pneus et la route, procédé caractérisé en ce qu'on détermine également l'angle de direction $\delta$ et la vitesse de rotation $\dot{\Phi}$ du véhicule autour de l'axe vertical (vitesse de giration), et on fixe un tracé de valeur limite inférieure de le vitesse do giration $\dot{\Phi}$ en fonction de l'angle de guidage $\delta$ en tenant compte de la vitesse de déplacement et du coefficient d'adhérence et en ce qu'on abaisse la pression de frein lorsque la vitesse de giration mesurée $\dot{\Phi}$ passe sous le tracé de la valeur limite.

**2.** Procédé selon la revendication 1, caractérisé en ce qu'on fixe une limite supérieure à la vitesse de giration et en ce qu'on établit la pression de frein lorsqu'on dépasse cette valeur limite.

**3.** Procédé de régulation de la stabllité d'un véhicule sur un trajet courbe selon lequel on détermine la vitesse de déplacement $V_F$ et le coefficient d'adhérence $\mu$ entre les pneumatiques et la route, procédé caractérisé en ce qu'on détermine également l'an gle de direction $\delta$ et la vitesse de rotation $\dot{\Phi}$ du véhicule autour de l'axe vertical (vitesse de giration), on fixe un tracé de valeur de consigne de la vitesse de giration $\dot{\Phi}$ en fonction de l'angle de direction $\delta$ en tenant compte de la vitessedu véhicule et du coefficient d'adhérence et, par augmentation ou diminution de la pression de frein on règle la vitesse de giration mesurée $\dot{\Phi}$ en direction du tracé de la valeur de consigne.

**4.** Procédé selon l'une des revendications 1 à 3, caractérisé en ce que pour les petits angles de direction on prédétermine une plage de tolérance pour la vitesse de giration $\dot{\Phi}$ et en ce qu'on abaisse la pression lorsqu'on quitte cette plage.

**5.** Procédé selon la revendication 4, caractérisé en ce qu'à partir d'un petit angle de direction, prédéterminé, on vérifie s'il y a une vitesse de giration dans la direction correcte et on diminue la pression de frein lorsque cette condition n'est pas satisfaite.

**6.** Procédé selon la revendication 4 ou 5, caractérisé en ce que pour une plage adjacente de l'angle de direction, on détermine le tracé de la valeur limite ou valeur de consigne par la condition d'Ackermann, le cas échéant corrigée.

**7.** Procédé selon la revendication 6, caractérisé en ce qu'on prédétermine un tracé constant de la valeur limite ou valeur de consigne à partir d'un angle de direction $\delta_{max}$ prédéterminé.

8. Procédé selon l'une des revendications 1 à 7, caractérisé en ce qu'il est en outre prévu un régulateur de pression de frein (ABS, ASR) pour optimiser le glissement de frein.

9. Procédé selon l'une des revendications 6 ou 7, caractérisé en ce que dans une zone comprise entre la zone définie par la condition d'Ackermann et celle définie par une valeur constante, on prédétermine le tracé de la valeur limite ou voleur de consigne par des segments des droites définies par l'équation suivante :

$$\dot{\Phi}_{Ph} = \pm K_{Ph} \cdot (\dot{\Phi}^{b}_{max} + \frac{\delta}{\delta_{max}} (\dot{\Phi}_{max} - \dot{\Phi}^{b}_{max}))$$

équation dans laquelle :
$K_{Ph}$ est une constante

$$\dot{\Phi}^{b}_{max} = \frac{1}{1 + K_{b}(-a)} \dot{\Phi}_{max} ,$$

$K_{b}$ une constante

$$\dot{\Phi}_{max} = \mu_{0} (-a)_{max},$$

et
$K_{\mu o}$ est une constante.

10. Procédé selon l'une des revendications 1 à 9, caractérisé en ce que la valeur d'adhérence $\mu$ est dérivée de l'accélération $(-a)_{max}$ du véhicule atteinte pendant un freinage.

Fig.1

Fig.2

Fig.3

Fig. 4

Fig.5

Fig.6